# EUROPEAN PATENT APPLICATION

(11) **EP 4 557 585 A1**
(43) Date of publication of application: **21.05.2025**
(21) Application number: 23461679.5
(22) Date of filing: 14.11.2023
(51) Int. Cl.: H02K 5/20, H02K 9/19

(54) **MOTOR RADIATOR**

(71) Applicant: Hamilton Sundstrand Corporation, Charlotte, NC 28217 (US)
(72) Inventor: MECZKOWSKI, Tomasz, 19-200 Grajewo (PL); KALUZA, Przemyslaw, 58-200 Dzierzoniów (PL)
(74) Representative: Dehns

(57) **Abstract**

A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel having a radially varying profile along the length of the channel to interrupt the linear flow of fluid along the channel and to cause continuous changes in flow direction as the fluid flows from one end of the channel to the other.

## Description

### TECHNICAL FIELD

The present disclosure is concerned with a cooling structure or radiator for a rotary electrical motor.

### BACKGROUND

A rotary electrical machine or motor comprises a rotor and a stator mounted coaxially within a motor housing. In an inner-rotor type, the motor comprises a rotating motor shaft rotatable about an axis, a rotor rotatably disposed to the rotor shaft and a stator mounted coaxially around the rotor, within the housing. The rotor has a rotor core and a plurality of permanent magnets supported by the core. The stator is provided with windings between gaps around the stator. Other electric motor designs have an outer-rotor design where the rotor is mounted and rotates around the stator. In either case, heat is generated by the relative rotation of the rotor and the stator and so typically, motors are provided with a cooling structure (or radiator) provided within the housing - typically as an annular body defining a plurality of axially extending channels between the outermost of the rotor and the stator, and the housing. The cooling structure is provided with one or two inlets at a first end and an outlet at a second, opposite end. Coolant e.g. air or liquid is provided to the structure at the inlet (in the case of two inlets, these may be used selectively depending on the context in which the motor is mounted) and flows through the channels to the outlet. The walls of the channels are adjacent the motor structure and so heat generated by operation of the motor passes through the walls and is absorbed by the coolant as it passes through the channels. The coolant thus becomes warmer by drawing heat away from the motor as it passes through the channels and warm coolant is ejected at the outlet.

While conventional radiators have proven fit for purpose, there is a desire for improved cooling structures that can provide more effective and efficient cooling without adding to the cost, complexity, size or weight of the structure.

### SUMMARY

According to the present disclosure, there is provided a cooling structure for a rotary electric machine, the structure comprising an annular radiator body defining an axis X between a first end and a second end, the annular body having a radially inner wall and a radially outer wall and a plurality of channels defined between the radially inner wall and the radially outer wall, each extending from the first end to the second end, each channel having a radially varying profile along the length of the channel to interrupt the linear flow of fluid along the channel and to cause continuous changes in flow direction as the fluid flows from one end of the channel to the other.

The radially varying profile may be e.g. created by the channel being shaped to form a wave shape seen in the direction from one end of the channel to the other to create a sweep on the fluid flow direction. The wave may be a rounded wave shape of successive convex and concave shapes or peaks and valleys as seen in the axial direction from one end of the channel to the other end.

In examples, grooves may be provided along the top and/or bottom of the channel which provides an increased surface area for heat transfer in the channel compared to a flat top and/or bottom shape.

In an alternative example, the change in flow direction as the fluid flows through the channel may be caused by the inner surface of the channel being provided with indents in the channel surface.

### BRIEF DESCRIPTION

Examples of the radiator according to this disclosure will now be described with reference to the drawings. It should be noted that these are examples only, and variations are possible within the scope of the claims.
Figure 1 is a three-dimensional view of a conventional rotary electric motor with a cooling structure.
Figure 2 is a partial section of a motor and cooling structure according to the disclosure.
Figure 3 is a view of a channel of one embodiment of the disclosure.
Figure 4 is a more detailed vie of the shape of a channel according to the embodiment of Fig. 3.
Figure 5 is a view of a channel of a radiator according to an alternative embodiment of the disclosure.

### DETAILED DESCRIPTION

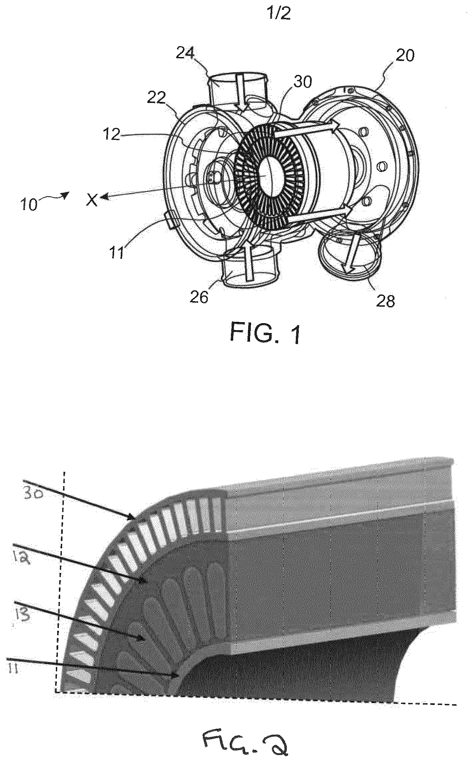

As mentioned above, a rotary electrical machine or motor typically comprises a rotor and a stator. In the example shown in Fig. 1, the motor 10 has a rotor in the form of a rotatable shaft 11, rotatable about an axis X around which is mounted, coaxially, a stator 12. The stator includes stator windings 13 (see Fig. 2) in stator gaps around the stator body as is conventional. The structure and operation of the rotary motor are conventional and well-known and will not be described further. The example shows an inner-rotor design. The motor could, however, also be an outer rotor/inner-stator design. Again, such motors are conventional and will not be described further.

Due to the rotation of the rotor relative to the stator, voltage and heat are generated at the stator. For efficiency and, in some cases, safety, there is a need to remove that heat from the motor. This is typically provided for by a cooling structure.

A housing 20 containing the stator and the rotor also contains a cooling structure between the motor parts 12 and the housing 20. The cooling structure is typically an annular radiator 30 mounted around the motor parts having a plurality of channels 35, 35' (seen in Figs. 2 to 5) extending axially from one end of the motor to the other. A manifold 22 is provided on the housing to provide coolant to and for coolant to exit from the radiator. In the example shown, the manifold 22 is provided with two inlets 24, 26 to which coolant can be provided selectively. For example, if the motor is provided for an aircraft, it could be mounted to either a left side or a right side and so the inlet 24, 26 on that side will be used and the other will be blocked off. In other examples, the manifold may only have a single inlet. The manifold also has an outlet 28 via which the coolant exits after it has passed through the radiator 30. The coolant may be air (e.g. ambient or cooled air e.g. RAM air in the case of an aircraft) or may be a coolant fluid or gas.

Conventionally, the radiator is machine manufactured using molding or other techniques and the channels have smooth, straight/linear inner walls. According to the present disclosure, the performance of the radiator is improved by shaping the walls to define a radially varying profile along the length of the channel to interrupt the linear flow of fluid along the channel and to cause continuous changes in flow direction as the fluid flows from one end of the channel to the other.

Various ways can be envisaged of shaping the channel profile to create the varying profile.

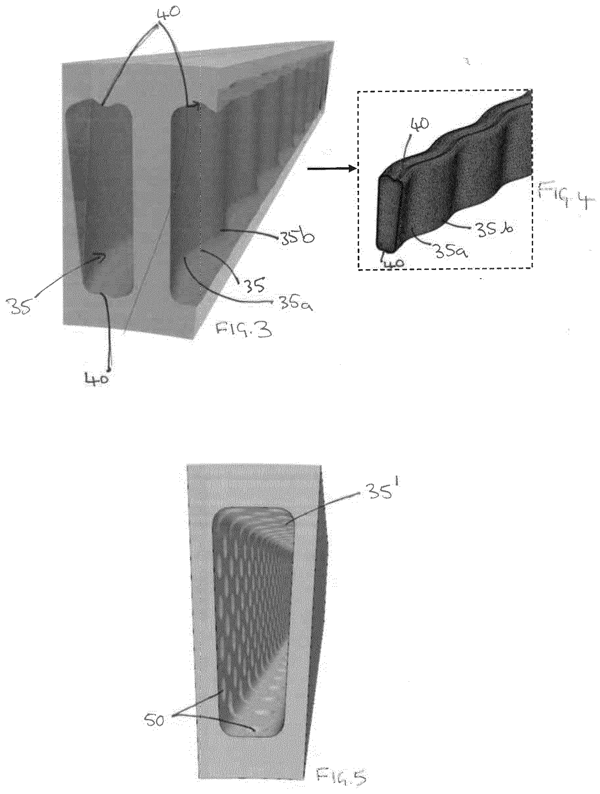

One example of shaping the channel inner profile to cause a continuous change of flow direction can be seen in the example shown in Figs. 3 and 4. The channel is shaped to form a wave shape seen in the direction from one end to the other to create a sweep on the fluid flow direction. In this example, the wave is a rounded wave shape of successive convex and concave shapes or peaks 35a and valleys 35b as seen in the axial direction from one end of the channel to the other end. As fluid flows into the channel at the first end it is buffeted by the wavy shape of the channel inner surface so that it continuously changes direction (compared to purely linear flow) as it travels along the channel. This increases turbulence in the fluid as it flows along the channel and increases the local heat transfer coefficient.

The heat transfer properties of the channel may be further improved by forming grooves 40 along the top and/or bottom of the channel which provides an increased surface area for heat transfer in the channel compared to a flat top and/or bottom shape. In the example shown, grooves are formed in both the top and the bottom of the channel.

With this wavy channel shape, the cyclic and continuous change of direction allows improvement of the angle of incidence of the fluid on the radiator channel surface, which leads to enhanced heat transfer. The turbulence introduced also results in better thermal performance.

In an alternative example, shown in Fig. 5, the change in flow direction as the fluid flows through the channel 35' is caused by the inner surface of the channel being provided with indents 50 in the channel surface (also referred to as negative bubbles). The indents are preferably rounded, dimple-type indents. Again, as the fluid flows into the channel, its linear flow is interrupted as it impacts the channel walls and is caused to change direction by impact with the surface indents. These also provide an increased surface area to improve thermal properties.

As described above for the first example, the motor comprises a housing 20 containing the stator and the rotor also contains a cooling structure between the motor parts 12 and the housing 20. The cooling structure is typically an annular radiator 30 mounted around the motor parts having a plurality of channels 35, 35' (seen in Figs. 2 to 5) extending axially from one end of the motor to the other. A manifold 22 is provided on the housing to provide coolant to and for coolant to exit from the radiator. In the example shown, the manifold 22 is provided with two inlets 24, 26 to which coolant can be provided selectively. For example, if the motor is provided for an aircraft, it could be mounted to either a left side or a right side and so the inlet 24, 26 on that side will be used and the other will be blocked off. In other examples, the manifold may only have a single inlet. The manifold also has an outlet 28 via which the coolant exits after it has passed through the radiator 30. The coolant may be air (e.g. ambient or cooled air e.g. RAM air in the case of an aircraft) or may be a coolant fluid or gas.

In this example, though, the inner surface of the channel has negative bubbles 50 formed therein, along its length, which function to change the flow direction in place of the wave shape of the first example. In the example shown, the channels are straight from one end to the other, as seen in Fig. 5, but the inner wall 350 of the channel has indents 50 formed therein. The small negative bubbles or indents 50 improve the flow recirculation near the channel wall 350, whilst having a low pressure drop penalty. This leads to enhanced heat transfer between the fluid and the channel wall 350.

The negative bubbles 50 can be arranged in the channel wall regardless of orientation. The use of negative bubbles compared to added structural features also means that the channels are made with less material and so the overall weight and cost is reduced.

It is also feasible that the two examples can be combined such that the wall of the wavy shape channel of the first example is also provided with negative bubbles/indents of the second example.

Developments in additive manufacturing techniques allow such shapes to be formed.

Measurements taken for radiators using designs according to the disclosure have shown an improved heat transfer area and, therefore, increased heat exchange efficiency factor compared to conventional straight channels. The resulting disturbances in flow structure lead to an energy exchange between individual gas particles and the solid surface of the channel, which contributes to higher heat transfer efficiency. The shape and size of the wavy structure and the heights of the peaks/depths of the valleys and/or grooves, where present, as well as the shape, size, distribution pattern and density of negative bubbles in those examples can be adjusted according to application requirements.

The formation of such channels has recently become possible due to the advent of and advances in additive manufacturing (AM) technology. AM allows the radiator of this disclosure to be formed in a simple and economic manner. Alternatively, however, the channels could be formed using other known methods.

## Claims

1. A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel having a radially varying profile along the length of the channel to interrupt the linear flow of fluid along the channel and to cause continuous changes in flow direction as the fluid flows from one end of the channel to the other.

2. The cooling structure of claim 1, wherein the radially varying profile is created by the channel being shaped to form a wave shape seen in the direction from one end of the channel to the other to create a sweep on the fluid flow direction.

3. The cooling structure of claim 2, wherein the wave shape is a rounded wave shape of successive convex and concave shapes or peaks and valleys (35a, 35b) as seen in the axial direction from one end of the channel to the other end.

4. The cooling structure of claim 1, 2 or 3, further comprising grooves (40) provided along the top and/or bottom of the channel.

5. The cooling structure of claim 1, wherein the radially varying profile is provided by the inner surface of the channel being provided with indents (50) in an inner surface of the channel.

6. The cooling structure of claim 5, wherein the indents are rounded dimples.

7. The cooling structure of any preceding claim, wherein the radiator body is formed by a lost-wax casting method.

8. The cooling structure of any preceding claim wherein channels are formed by additive manufacturing.

9. The coolant structure of any preceding claim, further comprising a coolant inlet at the first end and a coolant outlet at the second end.

10. A rotary electric motor comprising a rotor and a stator in coaxial arrangement and a cooling structure as claimed in any preceding claim around the rotor and stator.

11. A rotary electric motor as claimed in claim 10, further comprising a housing containing the coaxial assembly of the rotor and the stator and the cooling structure.

12. A rotary electric motor as claimed in claim 11 in combination with claim 9, wherein the housing includes a manifold defining the inlet and the outlet.

13. A rotary electric motor as claimed in any preceding claim, further comprising a source of coolant provided to the coolant structure to flow through the channels from the first end to the second air.

14. A rotary electric motor as claimed in claim 13, wherein the coolant is air.

15. A rotary electric motor as claimed in any of claims 10 to 14, being a motor in an aircraft.

## Amended claims

### Amended claims in accordance with Rule 137(2) EPC.

1. A cooling structure for a rotary electric machine, the structure comprising an annular radiator body (30) defining an axis X between a first end and a second end, **characterised by** the annular body having a radially inner wall and a radially outer wall and a plurality of channels (35, 35') defined between the radially inner wall and the radially outer wall, each extending from the first end to the second end, each channel (35, 35') having a radially varying profile along the length of the channel to interrupt the linear flow of fluid along the channel and to cause continuous changes in flow direction as the fluid flows from one end of the channel to the other.

2. The cooling structure of claim 1, wherein the radially varying profile is created by the channel (35) being shaped to form a wave shape seen in the direction from one end of the channel to the other to create a sweep on the fluid flow direction.

3. The cooling structure of claim 2, wherein the wave shape is a rounded wave shape of successive convex and concave shapes or peaks and valleys (35a, 35b) as seen in the axial direction from one end of the channel to the other end.

4. The cooling structure of claim 1, 2 or 3, further comprising grooves (40) provided along the top and/or bottom of the channel.

5. The cooling structure of claim 1, wherein the radially varying profile is provided by the inner surface of the channel (35') being provided with indents (50) in an inner surface of the channel.

6. The cooling structure of claim 5, wherein the indents are rounded dimples.

7. The cooling structure of any preceding claim, wherein the radiator body (30) is formed by a lost-wax casting method.

8. The cooling structure of any preceding claim wherein channels (35, 35') are formed by additive manufacturing.

9. The coolant structure of any preceding claim, further comprising a coolant inlet (24, 26) at the first end and a coolant outlet (28) at the second end.

10. A rotary electric motor comprising a rotor (11) and a stator (12) in coaxial arrangement and a cooling structure (30) as claimed in any preceding claim around the rotor and stator.

11. A rotary electric motor as claimed in claim 10, further comprising a housing (20) containing the coaxial assembly of the rotor and the stator and the cooling structure.

12. A rotary electric motor as claimed in claim 11 in combination with claim 9, wherein the housing includes a manifold (22) defining the inlet and the outlet.

13. A rotary electric motor as claimed in any preceding claim, further comprising a source of coolant provided to the coolant structure to flow through the channels from the first end to the second end.

14. A rotary electric motor as claimed in claim 13, wherein the coolant is air.

15. A rotary electric motor as claimed in any of claims 10 to 14, being a motor in an aircraft.
